# EUROPEAN PATENT APPLICATION

(11) **EP 1 801 722 A2**
(43) Date of publication of application: **27.06.2007**
(21) Application number: 06025151.9
(22) Date of filing: 05.12.2006
(51) Int. Cl.: G06F 21/00

(54) **Protecting copyrighted digital content against unauthorized copying**

(30) Priority: 12.12.2005 JP 2005357505
(71) Applicant: Xanavi Informatics Corporation, Zama-shi, Kanagawa-ken 228-0012 (JP)
(72) Inventor: Sekiguchi, Takaaki Hitachi, Ltd., Int. Prop Office, Chiyoda-ku Tokyo 100-8220 (JP); Kato, Hiromitsu Hitachi, Ltd., Int. Prop Office, Chiyoda-ku Tokyo 100-8220 (JP)
(74) Representative: Strehl Schübel-Hopf & Partner

(57) **Abstract**

A copy control apparatus is provided in one-to-one correspondence with a car navigation system. Connection of the copy control apparatus with an information processing apparatus such as a PC enables to transmit content only from the information processing apparatus to which the copy control apparatus is connected to the car navigation system. With this configuration, the copy control apparatus stores a device key used to encrypt the content, and encrypts the device key with another encryption key to transmit the encrypted device key to the information processing apparatus. The information processing apparatus encrypts a copy of the content by use of the received device key, and then sends the encrypted copy to a content receiving apparatus. The content receiving apparatus decrypts the received copy of the content by use of a stored device key, and then stores the decrypted copy of the content in a storage unit.

## Description

### Claim of Priority

The present application claims priority from the Japanese patent application JP2005-357505 filed on December 12, 2005, the content of which is hereby incorporated by reference into this application.

### Background of the Invention

The present invention relates to an apparatus that is used to prevent copyrighted content from being illegally copied.

A car navigation system mainly provides a driver with traffic information by manipulating map data that is recorded in the car navigation system. In recent years, as media for recording the map data, products each adopting a hard disk drive (hereinafter referred to as "HDD") are becoming mainstream products.

In the case of such a car navigation system that is equipped with an HDD, the use of a recording medium such as a CD, or the use of telecommunication network, makes it possible to copy digital content stored in a different apparatus. For example, it is possible to copy music content, which is used in a PC (personal computer) at home, to a car navigation system to use the music content also in a car; and it is possible to copy the latest map data from a maintenance terminal of a dealer. However, if a copy of the content is permitted without limitation, content author's profits will be damaged. For this reason, it is necessary to limit the use of the content within a range of, what is called, "private copy", or within a range that is stipulated by the contract with the author.

From the viewpoint of the protection of the author's copyright, digital content is generally subjected to the technical protection by DRM (Digital Rights Management). In particular, a technology which is becoming widely prevalent is an encryption technology that makes it difficult to use content in apparatuses other than an apparatus which has acquired a license (decryption key) to use the content. However, if the use of the content is completely disallowed in apparatuses other than the apparatus that has acquired the license, this makes it difficult, for example, to use content, which has been purchased through a PC at home, even in a car navigation system, which is not desirable.

For this reason, the DRM technology described in "iTunes - How Copyright, Contract, and Technology Shape the Business of Digital Media - A Case Study", The Berkman Center for Internet & Society at Harvard Law School, Jun. 2004 has a function of enabling content sharing between a plurality of authenticated apparatuses. However, such content sharing between apparatuses becomes possible only when a single DRM is used. For example, if DRM used in the PC at home differs from that used in the car navigation system, it becomes difficult to share content because there are differences in encryption methods for encrypting the content, DRM control information given to the content, and the license formats. In addition, even if the content can be shared, the same person does not always possess all of the plurality of apparatuses. Accordingly, illegal content sharing by an indefinite number of persons may occur.

As a remedy for the above-described problem, Japanese Patent Application Laid-Open No. 2004-252752 discloses a gateway device for converting technical differences among different kinds of DRM. The disclosed technology makes it possible to share content among apparatuses that use different kinds of DRM. However, even if the content can be shared among different kinds of DRM, the problem of illegal content sharing by an indefinite number of persons as described above is not solved.

Therefore, there is disclosed the technology in which, in addition to the copy restriction by the device authentication as described above, the use of content is limited to only a content owner. For example, United States Patent Application 20030225863 (Japanese Patent Application Laid-Open No. 2004-62870) discloses the technology for preventing persons other than a content owner from using content with authentication techniques such as biometrics. However, when map data is updated by a dealer, an owner of an apparatus from which content is copied differs from that of an apparatus to which the content is copied. In addition, even if content at home is used, both an apparatus at home and a car navigation system require an additional unit including a biometrics unit, which results in addition of development cost.

### Summary of the Invention

A problem to be solved is that if users are allowed to copy content, which is stored in a PC at home or a maintenance terminal in a dealer, to a car navigation system, or the like, it is not possible to restrict illegal content sharing with a third party unless an expensive unit such as a biometrics unit is used.

The main feature of the present invention is that a copy control apparatus, which is provided in one-to-one correspondence with a car navigation system (hereinafter referred to as a "content receiving apparatus"), is incorporated in a PC or a dealer's maintenance terminal (hereinafter referred to as an "information processing terminal"), and the information processing terminal with the copy control apparatus incorporated can transmit content only to a content receiving apparatus which is provided in one-to-one correspondence with the copy control apparatus.

In order to perform the above processing, the copy control apparatus includes: a device key storage unit for storing a device key that is used to encrypt content to be transmitted to the content receiving apparatus; a unique key encryption unit for encrypting, by use of a unique key, transfer control information including the device key; and a transfer control information transmission unit for transmitting the encrypted transfer control information to the information processing apparatus.

Here, the device key corresponds to a device key that is stored in the content receiving apparatus. In addition, the unique key is a key having a specific value that differs for each information processing apparatus or each content. The unique key is calculated from identification information of a device (for example, an HDD or a CPU) included in the information processing apparatus, or from identification information of a recording medium to which content has been written.

The information processing apparatus for receiving the transfer control information includes: a transfer control information receiving unit for receiving transfer control information; a unique key decryption unit for decrypting the transfer control information by use of the unique key; a content encryption unit for encrypting a transfer message including a copy of content by use of a device key included in the transfer control information; and a disk writer for writing the encrypted copy to a disk.

The content receiving apparatus for receiving a transfer message includes: a device key storage unit for storing a device key used to decrypt the transfer message; a content decryption unit for decrypting the transfer message by use of the device key; and a content storage unit for storing a copy of the decrypted content.

As a result of the above-described configuration, a copy of content to be transferred to the content receiving apparatus is encrypted with a device key stored in the copy control apparatus. Accordingly, an apparatus capable of decrypting the encrypted content is limited to only a content receiving apparatus having a device key corresponding to the device key in question.

Incidentally, the above description is based on the assumption that a value of the unique key described with the copy control apparatus is the same as that of the unique key described with the information processing apparatus, both of which are based on the common key (symmetric key) cryptography. However, even if this unique key is treated as a value that is calculated by the public key cryptography or other technologies, the contents of the present invention do not differ. The device key described with the copy control apparatus, and the device key described with the content receiving apparatus, can also be treated in the same manner.

In addition to the above, the copy control apparatus according to the present invention further includes: a device ID information receiving unit for receiving device ID information from the information processing apparatus; a device ID information storage unit for storing the device ID information; and a device change detector for, if a value of the received device ID information differs from a value stored in the device ID information storage unit, adding initialization instruction information to the transfer control information.

The information processing apparatus further includes: a device ID information acquisition unit for acquiring device ID information to be transmitted to the information processing apparatus; and a device ID information transmission unit for transmitting the device ID information to the information processing apparatus. The received initialization instruction information is added to the transfer message before the transfer message is transmitted to the content receiving apparatus. Then, the content receiving apparatus which has received the transfer message including the initialization instruction information erases all content stored in the content storage unit.

As a result of the above-described configuration, if the copy control apparatus is connected to each of a plurality of information processing apparatuses to try to store a copy of content, which is stored in each of the information processing apparatuses, in a content receiving apparatus corresponding to the copy control apparatus, content stored in the content receiving apparatus is erased. To be more specific, it becomes possible to prevent a user from transferring, for example, content possessed by a third party (for example, a friend) to a content receiving apparatus (a car navigation system, or the like) of the user.

As a result of using the copy control apparatus according to the present invention, it becomes possible to transfer a copy of copyrighted content stored in a PC at home only to a car navigation system that is possessed by an owner of the PC. The present invention, therefore, has an advantage that it is possible to restrict illegal content sharing with third parties.

### Brief Description of the Drawings

Fig. 1 is a diagram illustrating an overall configuration of a content transfer system according to a first embodiment of the present invention.
Fig. 2 is a diagram illustrating a configuration of a copy control apparatus according to the first embodiment of the present invention.
Fig. 3 is a diagram illustrating a configuration of an information processing apparatus according to the first embodiment of the present invention.
Fig. 4 is a diagram illustrating a configuration of a content receiving apparatus according to the first embodiment of the present invention.
Fig. 5 is a diagram illustrating, as an example, data of a unique key according to the first embodiment of the present invention.
Fig. 6 is a diagram illustrating contents of transfer control information according to the first embodiment of the present invention.
Fig. 7 is a diagram illustrating contents of a transfer message according to the first embodiment of the present invention.
Fig. 8 is a flowchart illustrating operations of the copy control apparatus according to the first embodiment of the present invention.
Fig. 9 is a flowchart illustrating operations of the information processing apparatus according to the first embodiment of the present invention.
Fig. 10 is a flowchart illustrating operations of the content receiving apparatus according to the first embodiment of the present invention.
Fig. 11 is a diagram illustrating an overall configuration of a content transfer system according to a second embodiment of the present invention.
Fig. 12 is a diagram illustrating a configuration of a copy control apparatus according to the second embodiment of the present invention.
Fig. 13 is a diagram illustrating a configuration of an information processing apparatus according to the second embodiment of the present invention.
Fig. 14 is a diagram illustrating a configuration of a device key database according to the second embodiment of the present invention.
Fig. 15 is a diagram illustrating a configuration of a unique key database according to the second embodiment of the present invention.
Fig. 16 is a diagram illustrating a transfer control information creation window according to the second embodiment of the present invention.

### Description of the Preferred Embodiments

### First Embodiment

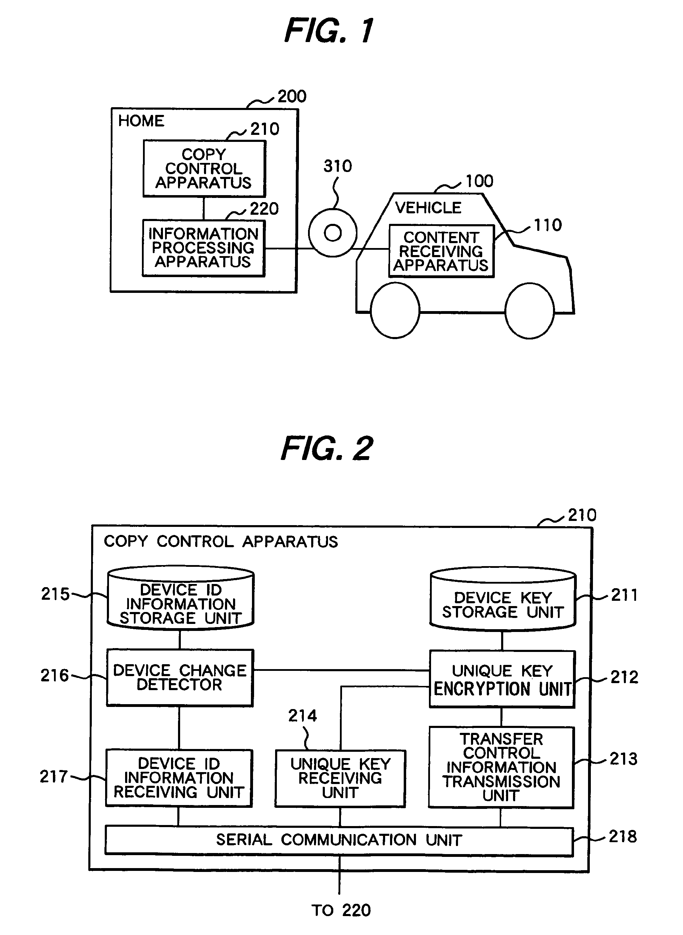

A first embodiment will be described with reference to Figs. 1 through 10 as below. In the first embodiment, a copy control apparatus which is connected to a PC through USB (Universal Serial Bus) is provided with a car navigation system. Then, by encrypting content with a specific encryption key that is recorded beforehand in the copy control apparatus, a destination of the content is limited to only the car navigation system that has a decryption key corresponding to this encryption key.

Fig. 1 is a diagram illustrating an overall configuration of a content transfer system according to the first embodiment. In Fig. 1, a content receiving apparatus 110 is located in a vehicle 100; and an information processing apparatus 220 and a copy control apparatus 210 are located at home 200. The copy control apparatus 210 is connected to the information processing apparatus 220 through USB. In addition, content is transmitted/received between the information processing apparatus 220 and the content receiving apparatus 110 by use of a recording media 310 such as a CD-R. However, this connection may also be made through a LAN (Local Area Network) or a wireless LAN, or by means of other information and communication technologies.

Fig. 2 is a diagram illustrating in detail a configuration of the copy control apparatus 210. The copy control apparatus 210 includes: a device key storage unit 211 for storing a device key that is used to encrypt content to be transmitted to the content receiving apparatus 110; a unique key receiving unit 214 for receiving from the information processing apparatus 220 a unique key that is used to encrypt transfer control information including the device key at the time of transmitting the transfer control information to the information processing apparatus 220; a unique key encryption unit 212 for encrypting the transfer control information by use of the unique key; a transfer control information transmission unit 213 for transmitting the encrypted transfer control information to the information processing apparatus 220; a device ID information receiving unit 217 for receiving device ID information from the information processing apparatus 220; a device ID information storage unit 215 for storing the device ID information; a device change detector 216 for detecting whether or not the received device ID information differs from a value stored in the device ID information storage unit 215; and a serial communication unit 218 whose basic function is to communicate with the information processing apparatus 220 through USB.

The copy control apparatus 210 is, for example, an USB memory, which is a device that is inserted into the information processing apparatus 220 when the apparatus is used. The copy control apparatus 210 can be configured by a memory for storing information of a recording unit, and a hard wired logic circuit.

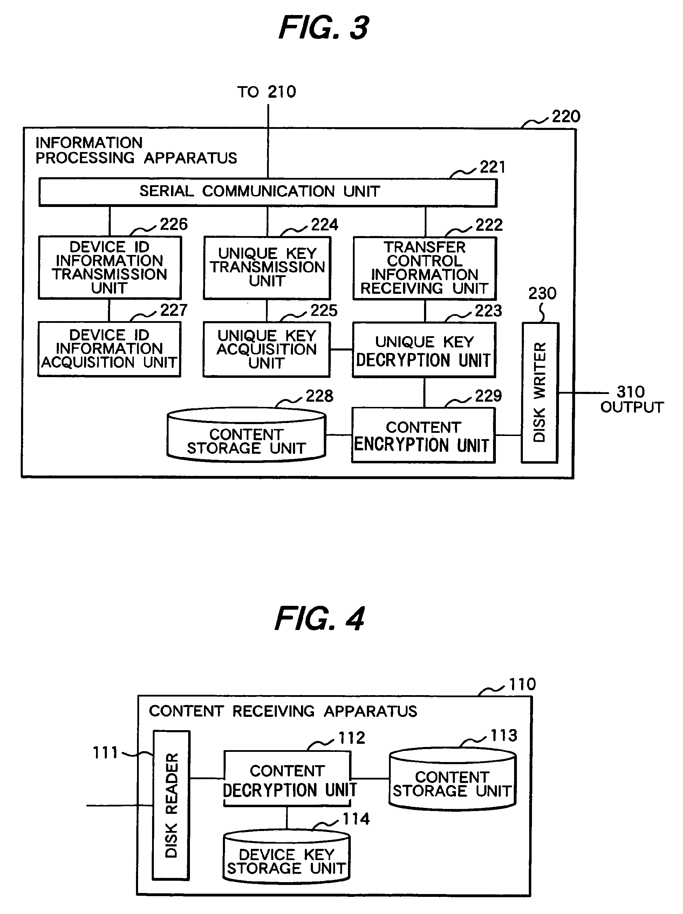

Fig. 3 is a diagram illustrating in detail a configuration of the information processing apparatus 220 to which the copy control apparatus 210 is connected. The information processing apparatus 220 includes: a serial communication unit 221 whose basic function is to communicate with the copy control apparatus 210 through USB; a transfer control information receiving unit 222 for receiving transfer control information transmitted from the copy control apparatus 210; a unique key acquisition unit 225 for acquiring a unique key that is used to decrypt the transfer control information; a unique key decryption unit 223 for decrypting the transfer control information by use of the unique key; a content storage unit 228 for storing content in the storage; a content encryption unit 229 for encrypting, by use of a device key included in the transfer control information, a transfer message including a copy of content to be transferred; a disk writer 230 for writing the content to a recording medium such as a CD-R; a unique key transmission unit 224 for transmitting a unique key to the copy control apparatus 210; a device ID information acquisition unit 227 for acquiring device ID information to be transmitted to the copy control apparatus 210; and a device ID information transmission unit 226 for transmitting the device ID information to the copy control apparatus 210.

The device ID information is a unique identifier for identifying the information processing apparatus 220. For example, a production number of the information processing apparatus 220 is used as the device ID information. The information processing apparatus 220 is a computer such as a PC. The transfer control information receiving unit 222, the unique key decryption unit 223, the unique key transmission unit 224, the unique key acquisition unit 225, the device ID information transmission unit 226, the device ID information acquisition unit 227, the content encryption unit 229, and the disk writer 230 are realized as a result of executing a program stored in a memory by this computer.

Fig. 4 is a diagram illustrating in detail a configuration of the content receiving apparatus 110. The content receiving apparatus 110 includes: a disk reader 111 for reading a transfer message on a recording medium, the transfer message being created by the information processing apparatus 220; a device key storage unit 114 for storing a device key in the storage, the device key being used to decrypt the transfer message; a content decryption unit 112 for decrypting the transfer message by use of the device key; and a content storage unit 113 for storing the decrypted content in the storage.

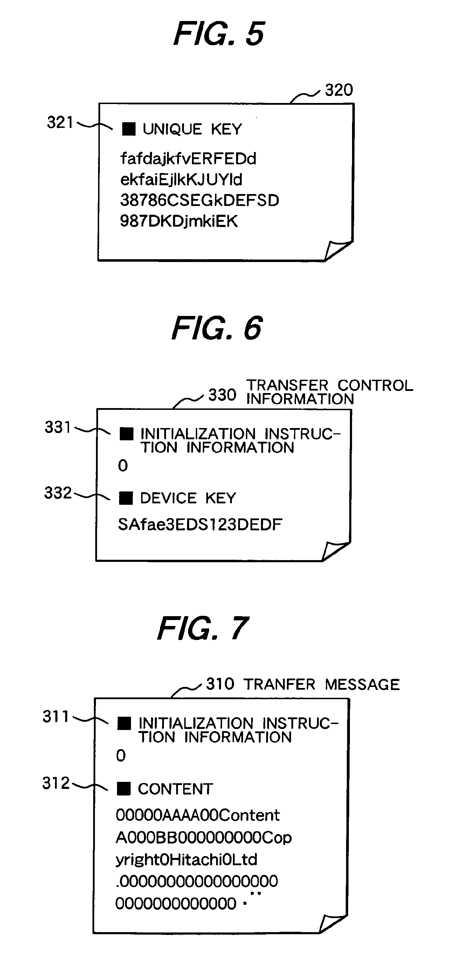

Fig. 5 is a diagram illustrating, as an example, data of a unique key 320 that is transmitted from the information processing apparatus 220 to the copy control apparatus 210. Fig. 5 illustrates, as device specific information, a value 321 that is calculated from a HDD or CPU identification number or information specific to other devices.

Fig. 6 is a diagram illustrating transfer control information 330 that is transmitted from the copy control apparatus 210 to the information processing apparatus 220. Fig. 5 illustrates initialization instruction information 331 and a device key 332.

Fig. 7 is a diagram illustrating a transfer message 310 that is transmitted from the information processing apparatus 220 to the content receiving apparatus 110. Fig. 7 illustrates initialization instruction information 311 and content 312. Incidentally, the transfer message 310 is encrypted with the device key 332 that is included in the transfer control information 330.

Processing steps of the first embodiment will be described as below according to the flow of processing performed by each apparatus when the information processing apparatus 220 transfers content to the content receiving apparatus 110.

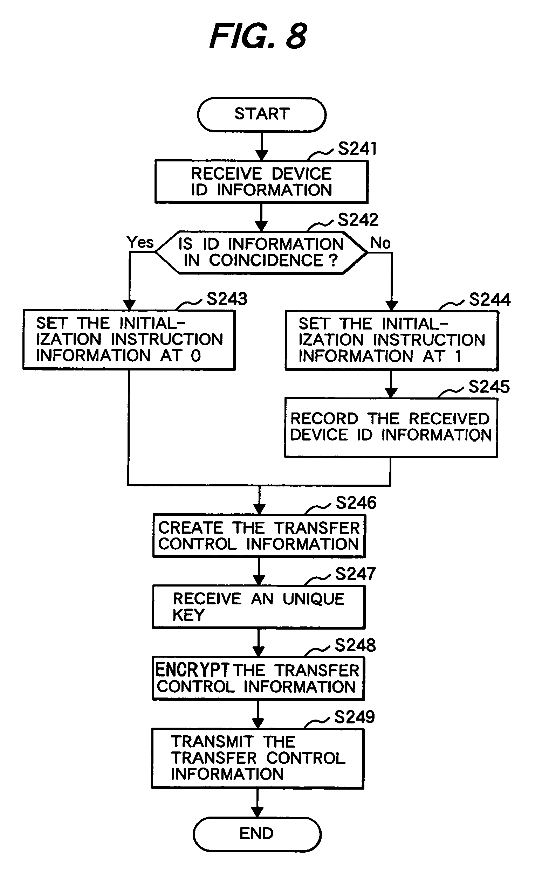

Fig. 8 is a flowchart illustrating how the copy control apparatus 210 operates. First of all, the copy control apparatus 210 receives device ID information from the information processing apparatus 220 (step S241). Next, the copy control apparatus 210 compares the received device ID information with device ID information that is stored in the device ID information storage unit 215 (step S242). If both of them coincide with each other, the copy control apparatus 210 outputs "0" to the unique key encryption unit 212 as initialization instruction information (step S243). If both of them do not agree with each other, the copy control apparatus 210 outputs "1" to the unique key encryption unit 212 as initialization instruction information (step S244), and then stores the received device ID information in the device ID information storage unit 215 (step S245). Next, the copy control apparatus 210 creates transfer control information that includes a device key stored in the device key storage unit 211 and the initialization instruction information (step S246). Next, the copy control apparatus 210 receives a unique key from the information processing apparatus 220 (step S247), and encrypts the created transfer control information by use of the received unique key (step S248), and then transmits the encrypted transfer control information to the information processing apparatus 220 before the process ends (step S249).

Incidentally, the unique key, which is received in the step S247, must be encrypted so that apparatuses and persons (in particular, users) other than the copy control apparatus 210 cannot decrypt the unique key. Here, any method may be used for this encryption. However, for example, the public key cryptography, which is typified by SSL (Secure Socket Layer) communication, is used to exchange a secret key between the copy control apparatus 210 and the information processing apparatus 220, and thereby it becomes possible to transmit/receive a unique key that is encrypted with this secret key. Alternatively, if it is difficult to utilize the public key cryptography because of the development and operation costs, a secret key which is exchanged by the well-known Diffie-Hellman key exchange method may also be used.

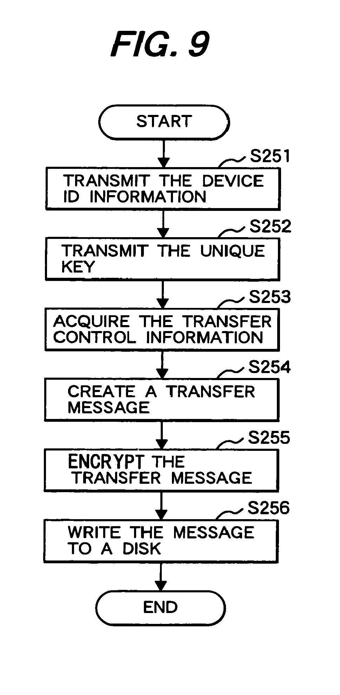

Fig. 9 is a flowchart illustrating how the information processing apparatus 220 operates. First of all, the information processing apparatus 220 transmits device ID information to the copy control apparatus 210 (step S251). Next, the information processing apparatus 220 transmits a unique key to the copy control apparatus 210 (step S252). After transmitting the device ID information and the unique key, the information processing apparatus 220 waits until transfer control information is received from the copy control apparatus 210. After the transfer control information is received (step S253), the information processing apparatus 220 decrypts the transfer control information with a unique key, and then creates a transfer message that includes initialization instruction information included in the transfer control information, and a copy of content to be transferred (step S254). Next, the information processing apparatus 220 encrypts the transfer message by use of a device key included in the transfer control information (step S255). Lastly, the information processing apparatus 220 writes the encrypted transfer message to a writable recording medium such as a CD-R (step S256), and the process ends after the completion of writing.

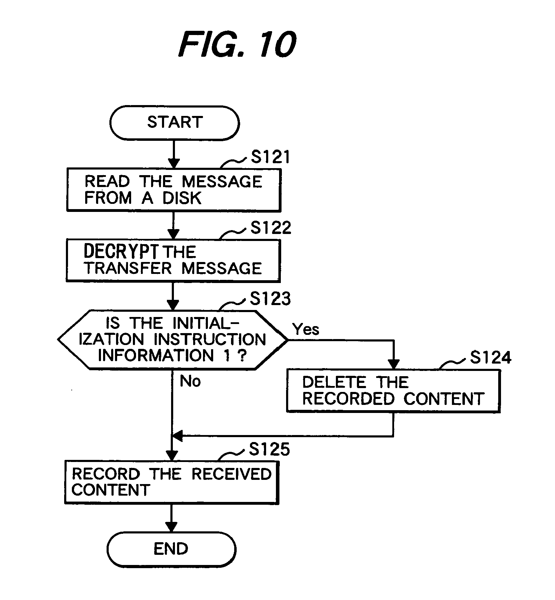

Fig. 10 is a flowchart illustrating how the content receiving apparatus 110 operates after the operation of the information processing apparatus 220 shown in Fig. 9 ends. First of all, the content receiving apparatus 110 reads out a transfer message from a recording media, such as a CD-R, to which the transfer message is written (step S121). Next, the content receiving apparatus 110 decrypts the read transfer message by use of a device key that is stored in the device key storage unit 114 (step S122). Then, the content receiving apparatus 110 refers to initialization instruction information included in the decrypted transfer message (step S123). If a value of the initialization instruction information is "1", the content receiving apparatus 110 erases existing content stored in the content storage unit 113 (step S124). If this value is "0", the existing content is kept unerased. After the content is erased, or if the value of the initialization instruction information is "0", the content receiving apparatus 110 records, in the content storage unit 113, a copy of the new content included in the received transfer message, and then the process ends (step S125).

Up to this point, the content transfer system according to the first embodiment was described. By connecting the copy control apparatus 210 according to this embodiment to a PC of a user, it is possible to limit a destination of copyrighted content stored in the PC only to a car navigation system that is provided in one-to-one correspondence with the copy control apparatus 210. Moreover, if a user connects the copy control apparatus to an information processing apparatus of an third party (for example, a friend) to try to transfer content recorded in the information processing apparatus of the third party to a car navigation system of the user, the existing content recorded in the car navigation system is erased. Therefore, it is possible to prevent the content from being illegally shared.

### Second Embodiment

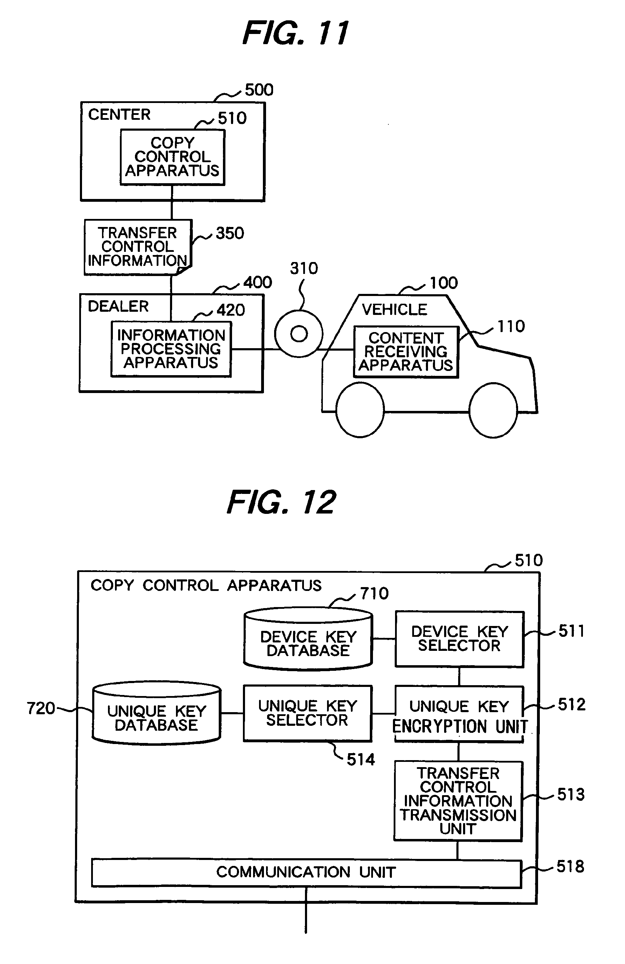

Next, a second embodiment will be described with reference to Figs. 11 through 16. In the second embodiment, a car navigation system, which is a destination of content including map data, is limited at the time of updating the map data by a dealer.

Fig. 11 is a diagram illustrating an overall configuration of a content transfer system according to the second embodiment. In Fig. 11, the content receiving apparatus 110 is located in the vehicle 100; an information processing apparatus 420 is located in a dealer 400; and a copy control apparatus 510 is located in a center 500. A connection between the copy control apparatus 510 and the information processing apparatus 420 may be made by any connection method so long as transfer control information described below can be transmitted. In addition, a connection between the information processing apparatus 420 and the content receiving apparatus 110 may be made by any connection method so long as a transfer message described below can be transmitted.

Fig. 12 is a diagram illustrating in detail a configuration of the copy control apparatus 510. The copy control apparatus 510 includes: a device key database 710 for storing a device key that is used to encrypt content to be transferred to the content receiving apparatus 110; a device key selector 511 for selecting a specified device key from the device key database 710; a unique key database 720 for storing a unique key that is used to encrypt transfer control information including the device key at the time of transmitting the transfer control information to the information processing apparatus 420; a unique key selector 514 for selecting a specified unique key from the unique key database 720; a unique key encryption unit 512 for encrypting the transfer control information by use of the unique key; a transfer control information transmission unit 513 for transmitting the encrypted transfer control information to the information processing apparatus 420; and a communication unit 518 for communicating with the information processing apparatus 420.

The copy control apparatus 510 according to the second embodiment is a server computer, and includes a storage device, an input unit, and a display unit. The device key database 710 and the unique key database 720 are databases stored in the storage device. A device key selector 511, a unique key encryption unit 512, a transfer control information transmission unit 513, and a unique key selector 514 are programs that are stored in a memory, and that are executed by the computer.

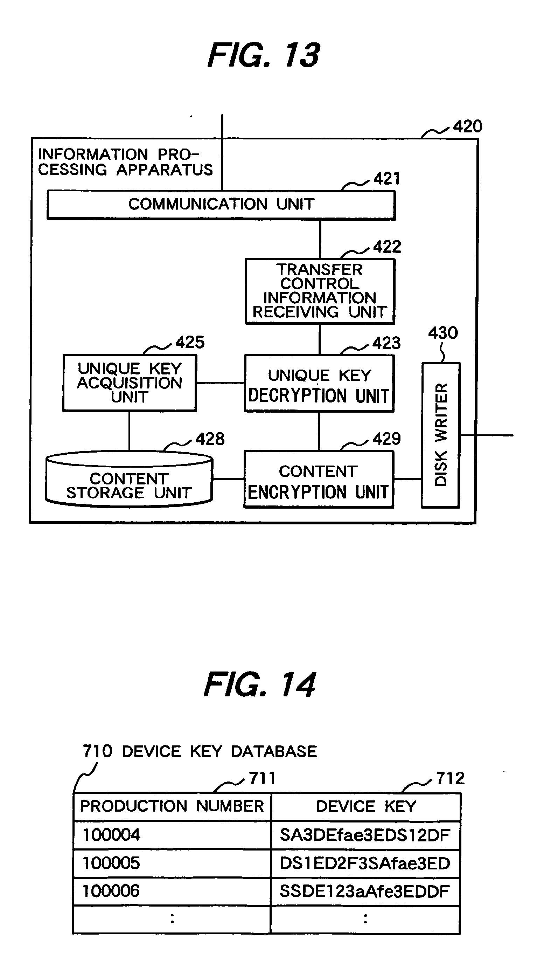

Fig. 13 is a diagram illustrating in detail a configuration of the information processing apparatus 420. The information processing apparatus 420 includes: a communication unit 421 for communicating with the copy control apparatus 510; a transfer control information receiving unit 422 for receiving transfer control information; a unique key acquisition unit 425 for acquiring, from the content storage unit 428, a unique key that is used to decrypt the transfer control information; a unique key decryption unit 423 for decrypting the transfer control information by use of the unique key; a content storage unit 428 for storing content and a unique key thereof; a content encryption unit 429 for encrypting, by use of a device key included in the transfer control information, a transfer message including a copy of content to be transferred; and a disk writer 430 for writing the encrypted content to a recording medium such as a CD-R.

Here, a value of the unique key which is acquired by the unique key acquisition unit 425 is the same as that of the unique key handled in the copy control apparatus 510 described above. The unique key in an encrypted state is added to the content so that apparatuses and persons (in particular, persons who can view the transfer control information) other than the information processing apparatus 420 cannot read the unique key. Any kind of encryption method may be used to encrypt the unique key. However, for example, the MKB (Master Key Block) method, which adopts the CPRM (Content Protection for Recordable Media), a copyright protection standard for DVD, can be used. The MKB method is an encryption method in which secret key information encrypted with a plurality of encryption keys are transmitted so that only a person who has one or more of the encryption keys can decrypt the secret key information.

Fig. 14 is a diagram illustrating a configuration of the device key database 710 that is stored in the storage device of the copy control apparatus 510. The device key database 710 includes a production number 711 of the content receiving apparatus 110 and a device key 712 that is stored in the content receiving apparatus 110 and that corresponds to the production number 711. Incidentally, if the device key 712 can be generated from the production number 711 by calculation, the device key database 710 may be designed to only have the production number 711.

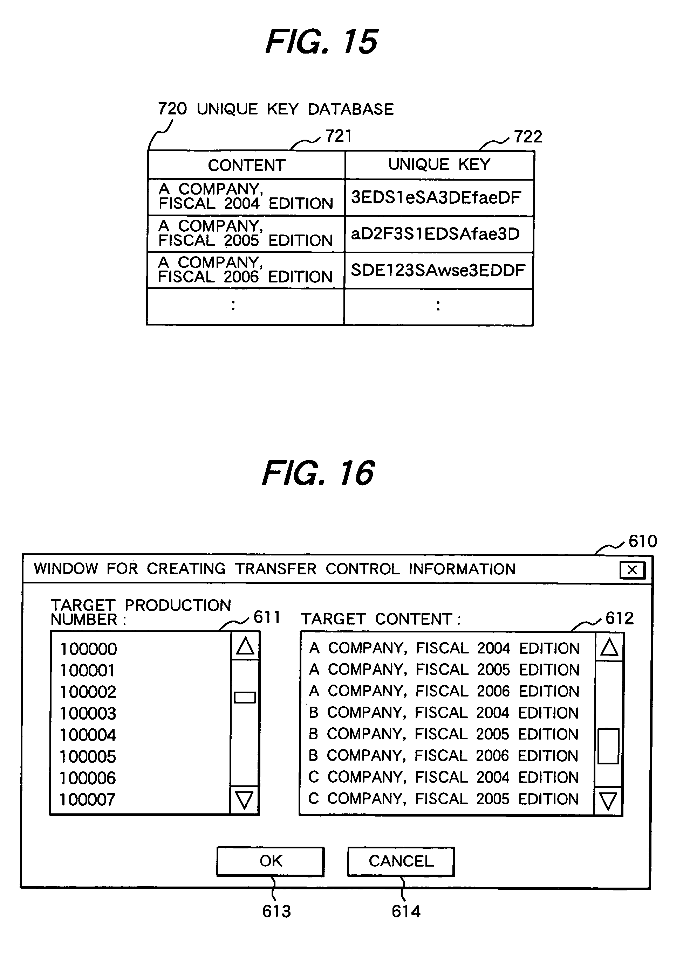

Fig. 15 is a diagram illustrating a configuration of the unique key database 720 stored in the storage device of the copy control apparatus 510. The unique key database 720 includes the correspondence between content 721 and a unique key 722.

The second embodiment will be described according to the flow of content transfer processing as below.

Fig. 16 is a diagram illustrating a transfer control information creation window 610 that is displayed on a display unit when the copy control apparatus 510 creates transfer control information. The transfer control information creation window 610 shows: a production-number specification component 611 used to specify a production number that identifies the content receiving apparatus 110; a content specification component 612 used to specify a content name indicating content to be transferred; an OK button 613 used to create transfer control information on the basis of the result of the selection; and a cancel button 614 used to stop the creation processing.

If the OK button 613 is pressed in the transfer control information creation window 610, the device key selector 511 of the copy control apparatus 510 refers to a production number specified by the production-number specification component 611, and then searches the device key database 710 for a device key corresponding to the production number. In addition, the unique key selector 514 refers to a content name specified by the content specification component 612, and then searches the unique key database 720 for a unique key corresponding to the specified content name.

The copy control apparatus 510 creates encrypted transfer control information on the basis of the device key and the unique key that have been selected by the above-described processing. It should be noted that the processing of creating transfer control information to transmit the transfer control information to the information processing apparatus 420 is similar to the operation of the copy control apparatus 210 in the first embodiment. However, the transfer control information does not include initialization instruction information. Moreover, the processing of receiving the transfer control information performed by the information processing apparatus 420 and the subsequent processing performed in the content receiving apparatus 110 are also similar to those of the first embodiment. However, the information processing apparatus 420 does not include the processing of transmitting the device ID information and the unique key to the copy control apparatus 510 (that is to say, S251 and S252). Additionally, the content receiving apparatus 110 does not include the processing of judging the initialization instruction information (that is to say, S123 and S124).

Up to this point, the content transfer system according to the second embodiment was described. According to this embodiment, it is possible to transfer content, which is specified in the transfer control information creation window, only to a car navigation system having a production number specified in the window.

When copyrighted content is transmitted/received between a plurality of apparatuses, the above-described technique ensures, at low cost and with simple mechanisms, validity of use of the content in a destination apparatus. This technique, therefore, can be applied to not only on-vehicle machines such as a car navigation system but also all kinds of devices that use content.

## Claims

1. A copy control apparatus that is connected to a content transfer system, the content transfer system comprising:
a content receiving apparatus that stores a device key specific to the apparatus, receives a copy of content encrypted with the device key, and decrypts the received copy to store the decrypted copy in a storage; and
an information processing apparatus that stores the content and a unique key that is a common key specific to the apparatus or specific to the content, and encrypts the copy of the content with the device key to transmit the encrypted copy to the content receiving apparatus, wherein
the copy control apparatus limits a destination of the copy to the content receiving apparatus, the copy control apparatus comprising:
a device key storage unit that stores the device key;
a unique key encryption unit that encrypts transfer control information including the device key by use of the unique key so that the information processing apparatus is allowed to decrypt the transfer control information; and
a transfer control information transmission unit that transmits the encrypted transfer control information to the information processing apparatus.

2. The copy control apparatus according to Claim 1, further comprising:
a unique key receiving unit that receives, from the information processing apparatus, the unique key that is specific to the information processing apparatus.

3. The copy control apparatus according to Claim 1, further comprising:
a unique key selector that selects the unique key that is specific to the content.

4. The copy control apparatus according to Claim 1, further comprising:
a device ID information receiving unit that receives, from the information processing apparatus, device ID information that is specific to the information processing apparatus; and
a device ID information storage unit that stores the device ID information.

5. The copy control apparatus according to Claim 4, further comprising:
a device change detector that compares the information received by the device ID information receiving unit with the device ID information stored in the device ID information storage unit to detect whether or not the received information coincides with the device ID information,
wherein:
the transfer control information includes a detection result detected by the device change detector; and
the detection result is transmitted to the content receiving apparatus through the information processing apparatus, and is used as a judgment condition for judging whether or not existing content is to be erased by the content receiving apparatus.

6. An information processing apparatus that is connected to a content transfer system, the content transfer system comprising:
a content receiving apparatus that stores a device key specific to the apparatus, receives a copy of content encrypted by the device key, and decrypts the received copy to store the decrypted copy in a storage; and
a copy control apparatus that stores the device key, and encrypts transfer control information including the device key by use of a unique key which is a common key specific to the apparatus or specific to the content, and transmits the encrypted transfer control information, wherein
the information processing apparatus stores the unique key and the content, and encrypts the copy of the content with the device key to transmit the encrypted copy to the content receiving apparatus, the information processing apparatus comprising:
a transfer control information receiving unit that receives the encrypted transfer control information from the copy control apparatus;
a unique key decryption unit that decrypts the transfer control information by use of the unique key;
a content encryption unit that encrypts the copy of the content by use of the device key; and
a disk writer that writes the encrypted copy to a disk.

7. The information processing apparatus according to Claim 6, further comprising:
a unique key acquisition unit that acquires the unique key from the information processing apparatus; and
a unique key transmission unit that transmits the unique key to the copy control apparatus.

8. The information processing apparatus according to Claim 6, further comprising:
a unique key acquisition unit that acquires the unique key that is specific to the content.

9. A program that is executed in an information processing apparatus, the information processing apparatus being connected to a content transfer system, the content transfer system comprising:
a content receiving apparatus that stores a device key specific to the apparatus, receives a copy of content encrypted by the device key, and decrypts the received copy to store the decrypted copy in a storage; and
a copy control apparatus that stores the device key, encrypts transfer control information including the device key by use of a unique key which is a common key specific to the apparatus or specific to the content, and transmits the encrypted transfer control information to the information processing apparatus, wherein
the information processing apparatus stores the unique key and the content, and encrypts the copy of the content with the device key to transmit the encrypted copy to the content receiving apparatus; and
the program comprises the steps of:
receiving the encrypted transfer control information from the copy control apparatus;
decrypting the transfer control information by use of the unique key;
encrypting the copy of the content by use of the device key; and
writing the encrypted copy to a disk.

10. The program according to Claim 9, further comprising the steps of:
acquiring the unique key from the information processing apparatus in the information processing apparatus; and
transmitting the unique key to the copy control apparatus from the information processing apparatus.

11. The program according to Claim 9, further comprising the step of:
acquiring the unique key specific to the content in the information processing apparatus.

12. A content receiving apparatus that is connected to a content transfer system, the content transfer system comprising:
an information processing apparatus that stores content and a unique key which is a common key specific to the apparatus or specific to content, encrypts a copy of the content by use of the device key that is specific to the apparatus, and transmits the encrypted copy; and
a copy control apparatus that stores the device key, encrypts transfer control information including the device key by use of the unique key, and transmits the encrypted transfer control information to the information processing apparatus, wherein
the content receiving apparatus stores the device key, receives the copy that is encrypted with the device key, and decrypts the received copy to store the decrypted copy in a storage, the content receiving apparatus comprising:
a device key storage unit that stores the device key;
a content decryption unit that decrypts the received copy of the content by use of the device key; and
a content storage unit that stores the decrypted copy of the content.

13. A copy control method performed by a copy control apparatus that is connected to a content transfer system, the content transfer system comprising:
a content receiving apparatus that stores a device key specific to the apparatus, receives a copy of content encrypted by the device key, and decrypts the received copy to store the decrypted copy in a storage; and
an information processing apparatus that stores the content and a unique key which is a common key specific to the apparatus or specific to the content, and encrypts the copy of the content with the device key to transmit the encrypted copy to the content receiving apparatus, wherein
the copy control apparatus limits a destination of the copy to the content receiving apparatus; and
the copy control method comprising the steps of:
encrypting, with the unique key, transfer control information including the device key stored in the copy control apparatus so that the information processing apparatus is allowed to decrypt the transfer control information; and
transmitting the encrypted transfer control information to the information processing apparatus.

14. The copy control method according to Claim 13, further comprising the step of:
receiving, from the information processing apparatus, the unique key that is specific to the information processing apparatus.

15. The copy control method according to Claim 13, further comprising the step of:
selecting the unique key that is specific to the content.
